# EUROPEAN PATENT APPLICATION

(11) **EP 4 852 422 A1**
(43) Date of publication of application: **09.12.2026**
(21) Application number: 25305791.3
(22) Date of filing: 02.06.2025
(51) Int. Cl.: H04N 19/105, H04N 19/117, H04N 19/176, H04N 19/182, H04N 19/186, H04N 19/593, H04N 19/82

(54) **CONVOLUTIONAL CROSS-COMPONENT MODEL IN VIDEO CODING**

(71) Applicant: InterDigital CE Patent Holdings, SAS, 75017 Paris (FR)
(72) Inventor: BORDES, Philippe, 35890 LAILLE (FR); BOSSEN, Frank, TORONTO, ON M6G 3H1 (CA); MARZUKI, Ismail, MONTREAL, H3J 1V4 (CA); NASER, Karam, 35250 MOUAZE (FR)
(74) Representative: Rittner, Karsten

(57) **Abstract**

In one implementation, a method of video encoding or decoding is presented, comprising: accessing a luma sample collocated with a chroma sample in a block of a picture and a plurality of neighboring samples of the luma sample; predicting the chroma sample based on the collocated luma sample and the plurality of neighboring samples, wherein at least one of the collocated luma sample and the plurality of neighboring samples is adjusted by an offset value; and encoding or decoding the block based on the predicted chroma sample.

## Description

### BACKGROUND

The present application is related to the convolutional cross-component model in video encoding and decoding.

### BRIEF SUMMARY

Briefly stated, in one embodiment, a method of video encoding is presented, comprising: accessing a luma sample collocated with a chroma sample in a block of a picture and a plurality of neighboring samples of the luma sample; predicting the chroma sample based on the collocated luma sample and the plurality of neighboring samples, wherein at least one of the collocated luma sample and the plurality of neighboring samples is adjusted by an offset value; and encoding the block based on the predicted chroma sample.

According to another embodiment, a method of video decoding is presented, comprising: accessing a luma sample collocated with a chroma sample in a block of a picture and a plurality of neighboring samples of the luma sample; predicting the chroma sample based on the collocated luma sample and the plurality of neighboring samples, wherein at least one of the collocated luma sample and the plurality of neighboring samples is adjusted by an offset value; and decoding the block based on the predicted chroma sample.

According to another embodiment, an apparatus for video encoding is presented, comprising one or more processors and at least one memory coupled to the one or more processors, wherein the one or more processors are configured to: access a luma sample collocated with a chroma sample in a block of a picture and a plurality of neighboring samples of the luma sample; predict the chroma sample based on the collocated luma sample and the plurality of neighboring samples, wherein at least one of the collocated luma sample and the plurality of neighboring samples is adjusted by an offset value; and encode the block based on the predicted chroma sample.

According to another embodiment, an apparatus for video decoding is presented, comprising one or more processors and at least one memory coupled to the one or more processors, wherein the one or more processors are configured to: access a luma sample collocated with a chroma sample in a block of a picture and a plurality of neighboring samples of the luma sample; predict the chroma sample based on the collocated luma sample and the plurality of neighboring samples, wherein at least one of the collocated luma sample and the plurality of neighboring samples is adjusted by an offset value; and decode the block based on the predicted chroma sample.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates the filter shape of a convolutional filter;
FIG. 5 illustrates the reference area (with its paddings) used to derive filter coefficients;
FIG. 6 illustrates the synopsis of the CCCM prediction methods;
FIG. 7 illustrates the spatial part of a GL-CCCM convolutional filter;
FIG. 8 illustrates the spatial part of the non-down sampled CCCM luma terms used for a convolutional filter; and
FIG. 9A, FIG. 9B and FIG. 9C illustrate different expressions for the non-linear term P, with value C in abscissa, according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

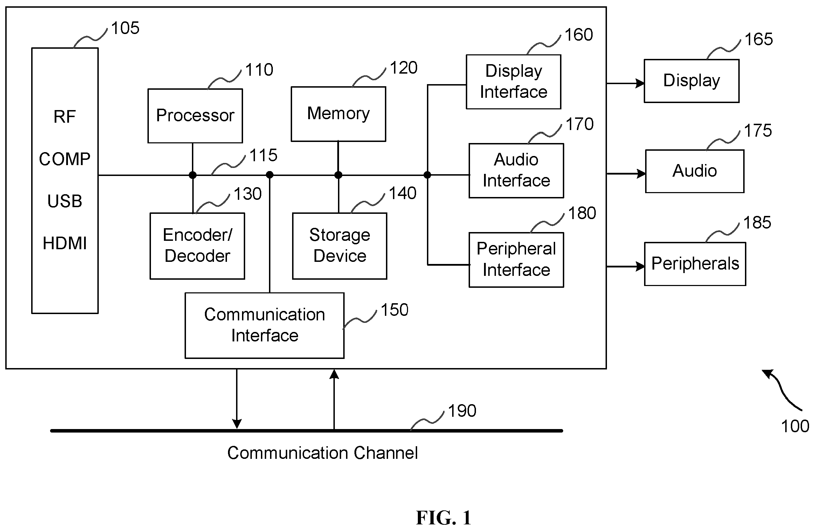

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

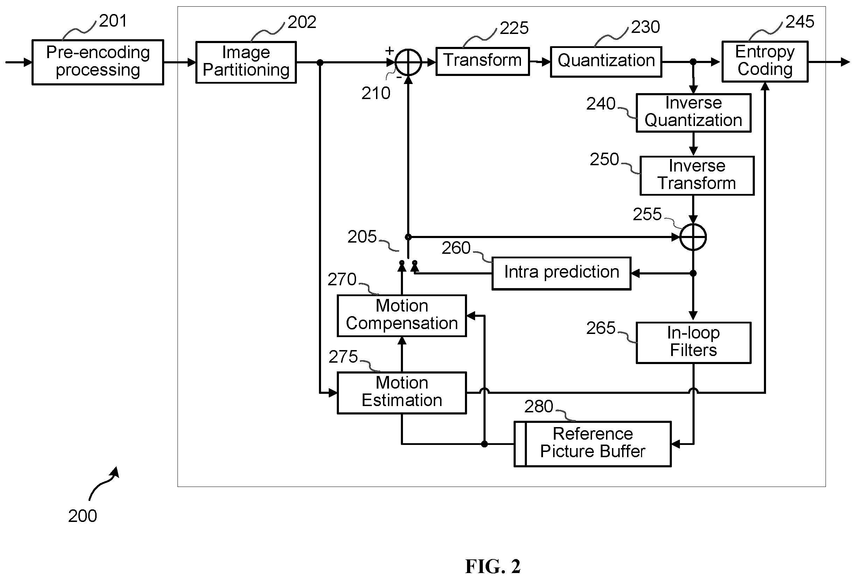

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

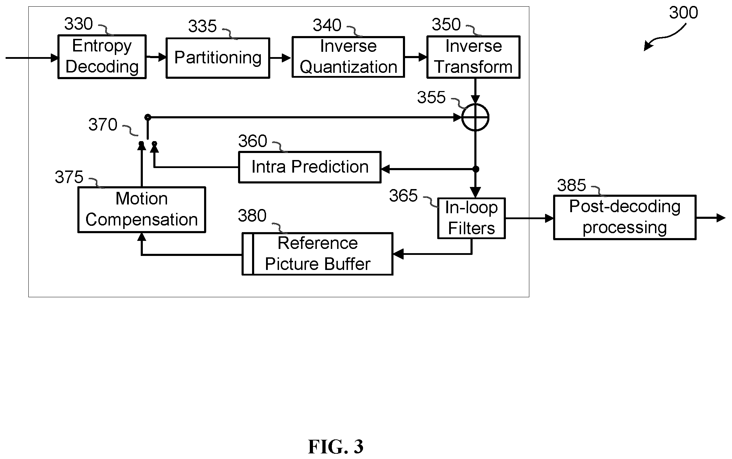

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (385) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

### Convolutional Cross-Component Model (CCCM)

In ECM (Enhanced Compression Model), the convolutional cross-component model (CCCM) predicts chroma samples from reconstructed luma samples in a similar spirit as done by the Cross-Component Luma Model (CCLM). The reconstructed luma samples may be down-sampled to match the lower resolution chroma grid when chroma sub-sampling is used.

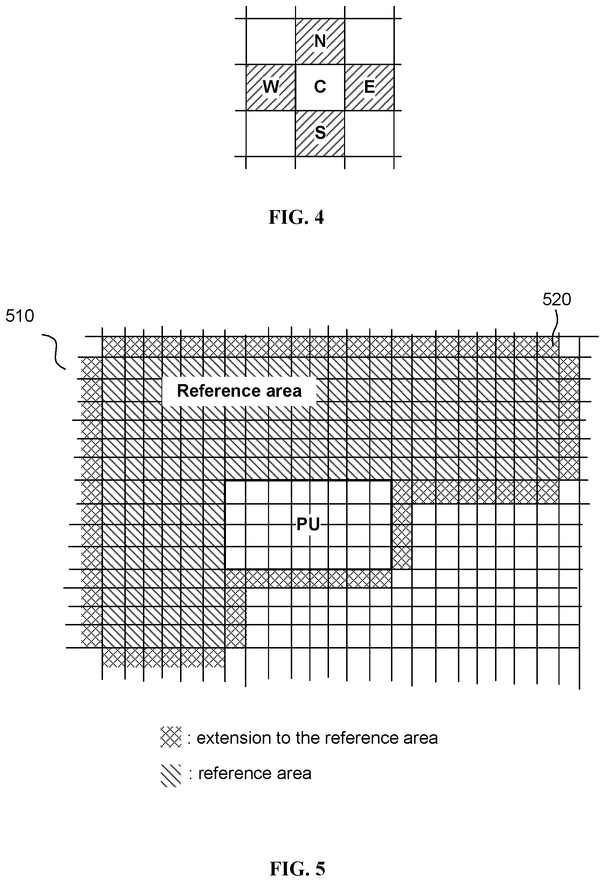

CCCM uses a convolutional filter with 7 parameters. Five coefficients are applied to luminance pixel values corresponding to a plus sign shape, one coefficient to a non-linear term (P) and the last coefficient to a bias term (B). The input to the spatial 5-tap component of the filter consists of a center (C) luma sample which is collocated with the chroma sample to be predicted and its above/north (N), below/south (S), left/west (W) and right/east (E) neighbors as illustrated in FIG. 4.

The nonlinear term P is represented as power of two of the center luma sample C and scaled to the sample value range of the content: $P = \left(C*C+midVal\right) ≫ bitDepth$ (1) where midVal is a rounding term equal to (1 << (bitDepth - 1)) and bitDepth is the sample bitDepth (sample range values is [0, (1 << bitDepth))). That is, for 10-bit content it is calculated as: $P = \left(C*C+512\right) ≫ 10$ (2)

The bias term B represents a scalar offset between the input and output (similarly to the offset term in CCLM) and is set to middle chroma value (512 for 10-bit content).

Output of the filter is calculated as a convolution between the filter coefficients cᵢ and the input values and clipped to the range of valid chroma samples: $predChromaVal = clip \left({c}_{0}C+{c}_{1}N+{c}_{2}S+{c}_{3}E+{c}_{4}W+{c}_{5}P+{c}_{6}B\right)$ (3)

The clip() function ensures the results remain in the sample value range (e.g., [0,1024) for 10-bits sample values).

The filter coefficients cᵢ are calculated by minimizing MSE between predicted and reconstructed chroma samples in the reference area (510). FIG. 5 (510) illustrates the reference area which consists of 6 lines/columns of chroma samples above and left of the PU. Reference area extends one PU width to the right and one PU height below the PU boundaries. The area is adjusted to include only available samples. The extensions 520 to the area are needed to support the "side samples" of the plus shaped spatial filter and are padded when in unavailable areas.

The MSE minimization is performed by calculating an auto-correlation matrix for the luma input and a cross-correlation vector between the luma input and chroma output.

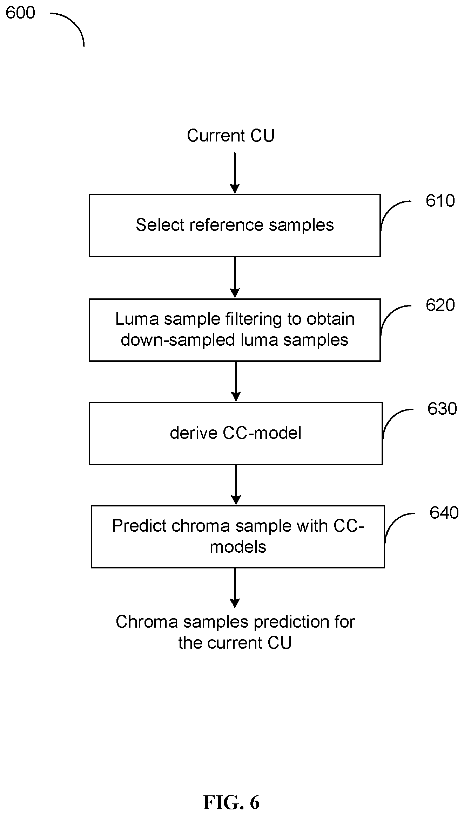

FIG. 6 illustrates the synopsis (600) of the chroma prediction modes using cross-component luma model, according to one embodiment.

At step 610, the reference samples (reconstructed luma and chroma sample values) are selected from the neighborhood of the current CU. For example, CCCM uses 6 lines and columns above the current CU. At step 620, the luma sample values may be filtered to obtain down-sampled luma samples (this step may be by-passed as explained further). At step 630, the parameters of the model are derived from the reference luma and chroma sample values. At step 640, the CC-model allows deriving the chroma sample prediction values from the co-located (down-sampled) reconstructed luma sample values.

### Derivation of convolution filter coefficients

The coefficients are derived using MSE method. To derive the coefficients {ci}, the autocorrelation matrix is inverted. For example, the autocorrelation matrix may be LDL^{T} decomposed and the final filter coefficients are calculated using back-substitution. The process follows roughly the calculation of the ALF filter coefficients in ECM, however LDL^{T} decomposition (alternative Cholesky decomposition) was chosen instead of Cholesky decomposition to avoid using square root operations. In another variant, Gaussian elimination technique is used to invert the matrix. In ECM, the calculation uses integer 64-bits arithmetic.

### Gradient and location based convolutional cross-component model (GL-CCCM)

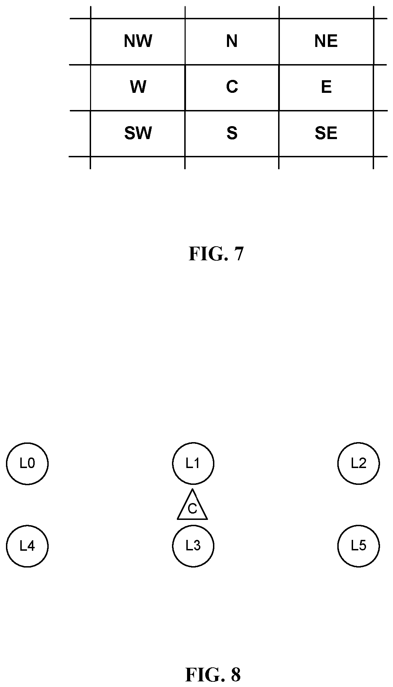

This is a variant of CCCM where the convolution applies on gradient and location information instead of the 4 spatial neighbor samples in the CCCM filter (see FIG. 7). The GL-CCCM filter for the prediction is: $predChromaVal = clip \left(c0C+c1Gy+c2Gx+c3Y+c4X+c5P+c6B\right)$ (4) where Gy and Gx are the vertical and horizontal gradients, respectively, and are calculated as (see FIG. 7): $\begin{matrix}Gy = \left(2N+NW+NE\right) - \left(2S+SW+SE\right) \\ Gx = \left(2W+NW+SW\right) - \left(2E+NE+SE\right)\end{matrix}$ (5)

Moreover, the Y and X parameters are the vertical and horizontal coordinates of the center luma sample location.

The rest of the parameters are the same as the CCCM tool. The reference area for the parameter calculation is the same as the CCCM method.

### CCCM using non-downsampled luma samples

In another variant, the reconstructed luma samples are not down-sampled to match the lower resolution chroma grid and the co-located reconstructed luma samples are used directly as depicted in FIG. 8. In this variant, also 4 non-linear terms ((*L*_{*i*-4} - offsetLuma)²) are built from L₂, L₃, L₄ and L₅ plus the bias B leading to 11 parameters. $predChromaVal = clip \left(\begin{matrix}{\sum }_{i = 0}^{5} {α}_{i} ⋅ \left({L}_{i}-offsetLuma\right) + {\sum }_{i = 6}^{9} {α}_{i} ⋅ \\ \left(\left({\left({L}_{i - 4}-offsetLuma\right)}^{2}+B\right)≫bitDepth\right) + {α}_{10} ⋅ B + offsetChroma\end{matrix}\right)$ (6)

The value of the offsets (offsetLuma and offsetChroma) may be set as average sample value, for example (1 << (bitDepth - 1)), the average of the luma samples in the current block or the value of the first sample (top-left) in the current block and *B* is equal to (1 << (bitDepth - 1)).

The derivation of the interpolation filter coefficients and the application of the convolutional model requires the calculation of the non-linear terms (P or *α*_{*i*=6..9} terms) for each sample. The implementation of the calculation of the non-linear terms is not hardware friendly.

Depending on the value of C or Lᵢ₋₄, the value of the corresponding non-linear terms may be huge (much larger than the linear terms) and the derived coefficients (ci, *αᵢ*) may be very small. Consequently, this may negatively affect the precision of final result obtained with the minimization method. Also, the value of other terms may be huge when the luma samples differ a lot locally.

In this document, we propose to improve the convolutional cross-component models (expression of the cross-component) by replacing non-linear terms by other forms (e.g., P), clipping some term contribution (e.g., non-linear term) and/or use sample difference in convolution expression. This can be generalized for any term in the convolution expression. Some embodiments are described in detail further below:
- Emb-1: use sample difference in convolution expression.
- Emb-2: clipping of sample difference
- Emb-3: derivation of the clipping threshold "D"
- Emb-4: non-linear term case

In the following embodiments, all the variants may be combined or applied alone. Also, all the proposed modifications/replacement of the non-linear term (P) of eq. (3) may be also applied to other non-linear terms such as in eq. (6).

### Embodiment-1 - use sample difference in convolution expression

In this embodiment, the CCCM convolution expression eq. (3) is modified by replacing some sample values with sample differences as depicted in eq. (7): $predChromaVal = clip \left({c}_{0}C+{c}_{1}\left(N-R\right)+{c}_{2}\left(S-R\right)+{c}_{3}\left(E-R\right)+{c}_{4}\left(W-R\right)+{c}_{5}P+{c}_{6}B\right)$ (7)

Generally, N-R, S-R, E-R and W-R are smaller than N, S, E, and W, respectively. Because using operands of smaller values may increase precision of deriving ci, replacing samples N, S, E, and W with N-R, S-R, E-R and W-R, respectively may improve the precision. For example, R = C. In the particular case where R = 0, eq. (7) is the same as eq. (3).

In a variant, R is equal to lumaOffset. "lumaOffset" may be set as the average of luma samples in the current block, or for example (1 << (bitDepth - 1)), the value of one luma sample at a pre-determined sample location (e.g., top-left sample) in the current block, or the average of the maximum and minimum luma samples in the current block.

In another variant, P is modified similarly as: $P = \left(\left(C-R\right)*\left(C-R\right)+midVal\right) ≫ bitDepth$ (8)

Note that in the above equation, if R is set to 2^{bitDepth-1}, then the possible range of values for P is reduced to 0..2^{bitDepth-2}. To fully utilize the range 0..2^{bitDepth}-1, the derivation of P is modified to: $P = \left(\left(2\left(C-R\right)+1\right)*\left(2\left(C-R\right)+1\right)+midVal\right) ≫ bitDepth$ (9)

In another variant, only P is modified, and the other terms of eq. (3) are not modified.

In another variant, in case C ≠ R, C is modified similarly as: (C - R).

In another variant, this embodiment may be applied to other cross-component convolution expressions. For example, for GL-CCCM, eq. (4) may be modified as follows: $predChromaVal = clip \left(c0C+c1Gy+c2Gx+c3\left(Y-{Y}_{R}\right)+c4\left(X-{X}_{R}\right)+c5P+c6B\right)$ (4b) where (X_{R},Y_{R}) are pre-determined offsets for the current block and P may be modified similarly as eq. (9). For example, (X_{R},Y_{R}) are the coordinates of the central sample in the current block.

As another example for non-down sampled CCCM, eq. (6) may be modified as follows: $predChromaVal = clip \left(\begin{matrix}{\sum }_{i = 0}^{5} {α}_{i} ⋅ \left({L}_{i}-R-offsetLuma\right) + {\sum }_{i = 6}^{9} {α}_{i} ⋅ \\ \left(\left({\left({L}_{i - 4}-R-offsetLuma\right)}^{2}+B\right)≫bitDepth\right) + {α}_{10} ⋅ B + offsetChroma\end{matrix}\right)$ (6b)

### Embodiment-2 - clipping of sample difference

In this embodiment depending on emb-1, each sample difference may be clipped with clipD(). Clipping allows mitigate the contribution of the large term values and the derived ci or *αᵢ* may have better precision. In the particular case where R = 0, the sample values N, S, E, and W are clipped.

For example, in case of CCCM: $\begin{matrix}predChromaVal = \\ clip \left({c}_{0}C+{c}_{1}.{clip}_{D}\left(N-R\right)+{c}_{2}.{clip}_{D}\left(S-R\right)+{c}_{3}.{clip}_{D}\left(E-R\right)+{c}_{4}.{clip}_{D}\left(W-R\right)+{c}_{5}P+{c}_{6}B\right)\end{matrix}$ (10) where clip_{D}(x) = max(-D , min(x, D)) (x is clipped to be between the lower bound -D and upper bound D) and where D is selected off-line and known to both encoder and decoder. For example, D may be set to 2^{bitDepth-3}. In a variant, D may be signaled in the bitstream.

Similarly, in case of GL-CCCM, some terms of the convolution expression eq. (4) may be clipped. For example: $predChromaVal = clip \left({c}_{0}.C+{c}_{1}.{clip}_{D}\left(Gy\right)+{c}_{2}.{clip}_{D}\left(Gx\right)+{c}_{3}Y+{c}_{4}X+c5P+c6B\right)$ (11)

This embodiment may be applied to any other cross-component convolution expressions.

Similarly, in case of CCCM using non-down sampled luma samples, some terms of the convolution expression eq. (6) may be clipped. For example: $C = clip \left(\begin{matrix}{\sum }_{i = 0}^{5} {α}_{i} ⋅ {clip}_{D} \left({L}_{i}-offsetLuma\right) + {\sum }_{i = 6}^{9} {α}_{i} ⋅ \\ \left(\left({clip}_{D}{\left({L}_{i - 4}-offsetLuma\right)}^{2}+B\right)≫bitDepth\right) + {α}_{10} ⋅ β + offsetChroma\end{matrix}\right)$ (12)

In a variant, advantageously, each term "cᵢ" may have different clipping bound of "Dᵢ".

In a variant, only some terms are modified.

In a variant, P is also clipped as: $P = \left({clip}_{D}\left(C-R\right)*{clip}_{D}\left(C-R\right)+midVal\right) ≫ bitDepth$ (13) or $P = {clip}_{D} \left(\left(\left(C-R\right)*\left(C-R\right)+midVal\right)≫bitDepth\right)$ (14)

In a variant, P is also clipped as: $P = \left({clip}_{D}\left(C\right)*{clip}_{D}\left(C\right)+midVal\right) ≫ bitDepth$ (15) or $P = {clip}_{D} \left(\left(C*C+midVal\right)≫bitDepth\right)$ (16)

In a variant, when P is clipped as in the above two variants, the right shift operation may shift by fewer than bitDepth bits (and the rounding value midVal adjusted accordingly).

### Embodiment-3 - derivation of the clipping threshold "D"

In this embodiment, the clipping threshold value "D" is derived at the decoder side. When deriving the coefficients {ci}, several pre-determined candidate values of "D" are tested by the decoder (e.g., 5, 10, 25, 50... or 2^{bitDepth-6}, 2^{bitDepth-5}, 2^{bitDepth-4}...). The decoder derives multiple sets of coefficients {ci}, one set for each value of "D" and evaluates the error (e.g., SAD between reconstructed samples and predicted samples with CC model) on one template (reconstructed samples neighboring to the current block). The model set with the minimal error is selected. At the encoder side, it uses the same set of pre-determined values of "D" and follows the same process to derive the clipping threshold value "D".

### Embodiment-4 - non-linear term

In this embodiment either depending on emb-1 or using the CCCM convolution expression eq. (1), the non-linear term (P) is modified as: $P = ABS \left(C-R\right)$ (17)

The benefit of this modification is that the absolute value ABS function requires fewer hardware resource to compute than a square multiplication. The value of R is set according to the variants described in emb-1.

In a variant: P = Clip_{D}(ABS(C - R)). If R is set to 0, then this simplifies to P = Clip_{D}(C).

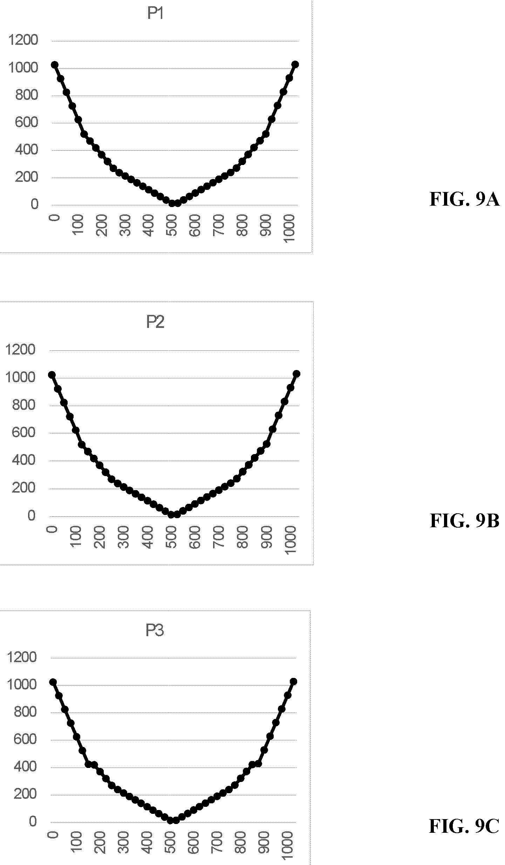

In a variant illustrated in FIG. 9A the square function is approximated or simulated by $\begin{matrix}T 0 = ABS \left(C-{2}^{bitDepth - 1}\right) \\ P = \left\{\begin{matrix}T 0 & if T 0 < {2}^{bitDepth - 2} \\ 2 T 0 - {2}^{bitDepth - 2} & if {2}^{bitDepth - 2} \leq T 0 < 3 ⋅ {2}^{bitDepth - 3} \\ 4 T 0 - {2}^{bitDepth} & otherwise\end{matrix}\right.\end{matrix}$ (19)

Alternatively, the above function may be slightly altered to ensure that P is always less than 2^{bitDepth} as illustrated in FIG. 9B: $\begin{matrix}T 0 = ABS \left(2C+1-{2}^{bitDepth}\right) \\ P = \left\{\begin{matrix}T 0 ≫ 1 & if T 0 < {2}^{bitDepth - 1} \\ T 0 - {2}^{bitDepth - 2} & if {2}^{bitDepth - 1} \leq T 0 < 3 ⋅ {2}^{bitDepth - 2} \\ 2 T 0 - {2}^{bitDepth} & otherwise\end{matrix}\right.\end{matrix}$ (19) or as illustrated in FIG. 9C: $\begin{matrix}T 0 = ABS \left(C-{2}^{bitDepth - 1}\right) \\ P = \left\{\begin{matrix}T 0 & if T 0 < {2}^{bitDepth - 2} \\ 2 T 0 - {2}^{bitDepth - 2} & if {2}^{bitDepth - 2} \leq T 0 < 3 ⋅ {2}^{bitDepth - 3} \\ 4 T 0 - 1 - {2}^{bitDepth} & otherwise\end{matrix}\right.\end{matrix}$ (20)

Note that the functions in FIG. 9A, FIG. 9B and FIG. 9C are piece-wise linear segments used to approximate/simulate the square function.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. **In** some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of video decoding, comprising:
accessing a luma sample collocated with a chroma sample in a block of a picture and a plurality of neighboring samples of the luma sample;
predicting the chroma sample based on the collocated luma sample and the plurality of neighboring samples, wherein at least one of the collocated luma sample and the plurality of neighboring samples is adjusted by an offset value; and
decoding the block based on the predicted chroma sample.

2. A method of video encoding, comprising:
accessing a luma sample collocated with a chroma sample in a block of a picture and a plurality of neighboring samples of the luma sample;
predicting the chroma sample based on the collocated luma sample and the plurality of neighboring samples, wherein at least one of the collocated luma sample and the plurality of neighboring samples is adjusted by an offset value; and
encoding the block based on the predicted chroma sample.

3. An apparatus for video decoding, comprising one or more processors and at least one memory coupled to the one or more processors, wherein the one or more processors are configured to:
access a luma sample collocated with a chroma sample in a block of a picture and a plurality of neighboring samples of the luma sample;
predict the chroma sample based on the collocated luma sample and the plurality of neighboring samples, wherein at least one of the collocated luma sample and the plurality of neighboring samples is adjusted by an offset value; and
decode the block based on the predicted chroma sample.

4. An apparatus for video encoding, comprising one or more processors and at least one memory coupled to the one or more processors, wherein the one or more processors are configured to:
access a luma sample collocated with a chroma sample in a block of a picture and a plurality of neighboring samples of the luma sample;
predict the chroma sample based on the collocated luma sample and the plurality of neighboring samples, wherein at least one of the collocated luma sample and the plurality of neighboring samples is adjusted by an offset value; and
encode the block based on the predicted chroma sample.

5. The method of claim 1 or 2, or the apparatus of claim 3 or 4, wherein the chroma sample is predicted based on a convolutional cross-component model.

6. The method of any one of claims 1, 2 and 5, or the apparatus of any one of claims 3-5, wherein the luma sample and the plurality of neighboring samples are from a downsampled luma block.

7. The method of any one of claims 1, 2, 5 and 6, or the apparatus of any one of claims 3-6, wherein the offset value corresponds to an average of luma samples of the block, a value of a luma sample at a pre-determined location of the block, or an average of the maximum and minimum luma samples of the block.

8. The method of any one of claims 5-7, or the apparatus of any one of claims 5-7, wherein only non-linear terms or only linear terms of the convolutional cross-component model are adjusted.

9. The method of any one of claims 5-8, or the apparatus of any one of claims 5-8, wherein a corresponding sample difference is formed after each of at least one of the collocated luma sample and the plurality of neighboring samples is adjusted, wherein the corresponding sample difference is clipped.

10. The method of claim 9, or the apparatus of claim 9, wherein the corresponding sample difference is clipped based on a bit depth of the picture.

11. The method of any one of claims 9 and 10, or the apparatus of any one of claims 9 and 10, wherein a different bound is used for clipping a different sample in the at least one of the collocated luma sample and the plurality of neighboring samples.

12. The method of claim 11, or the apparatus of claim 11, wherein a bound for clipping is obtained by:
for each value in a set of bound candidate values:
evaluating a corresponding error between reconstructed samples and predicted samples in a template; and
selecting a bound value from the set of candidate values based on the corresponding errors.

13. The method of any one of claims 1, 2 and 5-12, or the apparatus of any one of claims 3-12, wherein a non-linear term is represented by a piece-wise linear function.

14. The method of claim 13, or the apparatus of claim 13, wherein the non-linear term is based on an absolute function.

15. A signal, formatted by:
accessing a luma sample collocated with a chroma sample in a block of a picture and a plurality of neighboring samples of the luma sample;
predicting the chroma sample based on the collocated luma sample and the plurality of neighboring samples, wherein at least one of the collocated luma sample and the plurality of neighboring samples is adjusted by an offset value; and
encoding the block based on the predicted chroma sample.
